# DEMANDE DE BREVET EUROPEEN

(11) **EP 2 903 090 A1**
(43) Date de publication de la demande: **05.08.2015**
(21) Numéro de dépôt: 14290020.8
(22) Date de dépôt: 31.01.2014
(51) Int. Cl.: H01R 4/30, H01R 4/60, H02G 5/10, H01R 13/533

(54) **Conducteur électrique**

(71) Demandeur: Siemens Aktiengesellschaft, 80333 München (DE)
(72) Inventeur: Bousoltane, Karim, 38000 Grenoble (FR); Morin, Aurelie, 38600 Fontaine (FR); Genon Catalot, Marc, 38600 Fontaine (FR)
(74) Mandataire: Maier, Daniel Oliver

(57) **Abrégé**

L'invention propose un conducteur électrique comprenant :
- un corps (1) métallique ayant un axe principal et une extrémité axiale présentant une zone de contact (2, 2a, 2b) électrique,
- un élément (3) annulaire disposé autour d'une portion (4, 4a, 4b) axiale de l'extrémité dudit corps (1) recouvrant au moins la zone de contact (2, 2a, 2b),

caractérisé en ce que :
- ledit élément (3) et la portion (4) présentent au moins un évidement interne annulaire, ,
- ledit évidement forme un canal de refroidissement par circulation verticalement ascendante d'un flux thermique entre au moins une première ouverture (5i) dite inférieure et une deuxième ouverture (5s) dite supérieure, les dites ouvertures étant disposées entre l'élément (3) et la portion (4, 4a, 4b) et reliant l'évidement à l'extérieur de l'élément (3).

## Description

La présente invention concerne un conducteur électrique selon le préambule de la revendication 1.

L'invention concerne un conducteur électrique comprenant :
- un corps métallique de forme longitudinale telle que cylindrique ayant un axe principal et une extrémité axiale présentant une zone de contact électrique avec une partie distincte métallique telle qu'une broche,
- un élément annulaire disposée autour d'une portion axiale de l'extrémité dudit corps recouvrant au moins la zone de contact.

Un tel conducteur (ou contacteur électrique) est décrit sous WO2012-123323A1 qui prévoit que l'élément annulaire est conducteur d'au moins une partie du courant électrique initialement transitant au travers de la zone de contact, ceci dans le but de dissiper plus efficacement de la chaleur hors de la zone de contact en raison de forts courants. Par ailleurs, cet élément annulaire a des propriétés diélectriques précises pour des applications de connections électriques dans des enveloppes métalliques haute tension (de type GIS) que la présente invention n'aborde pas, du moins en tant que problématique objective technique, même si la solution proposée résout ce problème dans le cas d'installations à moyenne et haute tension.

Un but de la présente invention est de proposer un contacteur électrique sous forme d'un conducteur électrique ayant un corps métallique et un élément annulaire (comme décrit précédemment) soumis à un échauffement au voisinage d'une zone de contact électrique entre le corps métallique et un élément de contact externe, ledit échauffement pouvant être plus efficacement dissipé, sans obligation de prévoir que l'élément annulaire conduise une partie de courant électrique.

Un tel conducteur électrique est proposé au travers des caractéristiques de la revendication 1.

Un ensemble de sous-revendications présente également des avantages de l'invention.

Des exemples de réalisation et d'application sont fournis à l'aide de figures décrites :
- Figure 1: Schéma de principe de conducteur électrique selon l'invention pour une connexion par coulisse,
- Figure 2: Coupe du conducteur électrique selon figure 1 avec amplification de refroidissement,
- Figure 3: Perspective du conducteur électrique selon figure 2,
- Figure 4: Schéma de principe de conducteur électrique selon l'invention pour une connexion par vissage,
- Figure 5: Schéma de principe de conducteur électrique selon l'invention pour une connexion par vissage, ledit conducteur étant en configuration « verticale »,
- Figure 6: Coupe d'un conducteur électrique selon figure 2 sous forme monobloc.

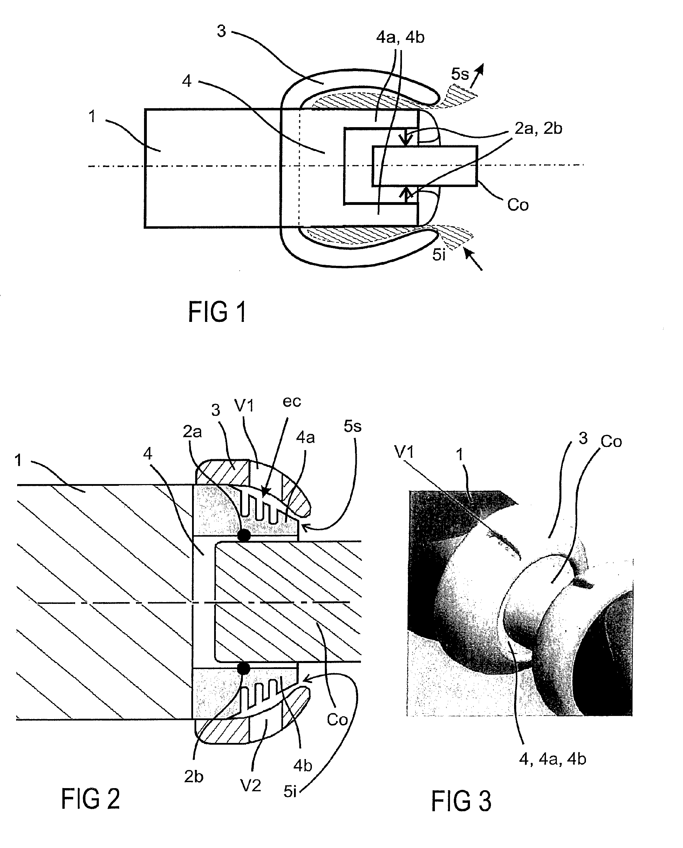

Figure 1 présente un schéma de principe de conducteur électrique selon l'invention pour une connexion électrique dite par coulisse au moyen par exemple d'une broche métallique mâle (Co) engagée dans une extrémité femelle (4a, 4b) du conducteur et venant en contact avec des doigts (2a, 2b) de contact électrique attenant au conducteur.

Selon ce mode de réalisation, l'invention prévoit ainsi un conducteur électrique comprenant :
- un corps (1) métallique de forme longitudinale tel que ici simplement cylindrique ayant un axe principal (dit axe cylindrique ici) et une extrémité axiale présentant une zone de contact électrique (ici les doigts de contact 2a, 2b),
- un élément (3) annulaire (de section carrée, rectangulaire, circulaire, etc.) disposé autour d'une portion (4, 4a, 4b) axiale de l'extrémité dudit corps (1) recouvrant au moins la zone de contact (2a, 2b). Il est ici compris que la portion axiale (4, 4a, 4b) comprend une section (4) ici cylindrique attenant à autre section ici aussi cylindrique (4a, 4b) présentant un contact de type femelle du conducteur.

Le conducteur selon l'invention se caractérise enfin en ce que :
- ledit élément (3) et la portion (4, 4a, 4b) présentent au moins un évidement interne annulaire (matérialisé par la zone hachurée),
- ledit évidement forme avantageusement un canal de refroidissement efficace par circulation verticalement ascendante d'un flux thermique naturel (voir flèches) entre au moins une première ouverture (5i) dite inférieure et une deuxième ouverture (5s) dite supérieure, les dites ouvertures étant disposées entre l'élément (3) et la portion (4, 4a, 4b) et reliant l'évidement à l'extérieur de l'élément (3).

Le conducteur selon l'invention prévoit que le corps (1), l'élément (3) et/ou la portion (4, 4a, 4b) comprennent principalement du cuivre ou de l'aluminium. Idéalement, des métaux du type aluminium présentent des caractéristiques de dissipation performante de chaleur et sont donc adéquates pour au moins l'élément (3) et si possible au moins une partie de la portion (4, 4a, 4b).

Enfin, l'élément (3) est idéalement une bague solidarisable au corps (1) simplement par enfilement ou vissage par-dessus la portion (4). Cet avantage est valide pour tous les modes de réalisation du conducteur selon l'invention et permet donc une installation fort aisée de la bague sur un corps de conducteur existant. Il est aussi de possible de prévoir l'élément (3) en deux demi-anneaux simplement solidarisables autour de la portion (4), ce qui permet une installation de l'élément (3) sur un conducteur existant sans contrainte de démontage de composants.

Figures 2 et 3 présentent respectivement une coupe et une perspective du conducteur électrique selon figure 1 avec des moyens d'amplification du refroidissement permis par le canal interne à l'élément (3).

D'une part, le conducteur selon l'invention prévoit que l'élément (3) comprend au moins deux ouvertures supplémentaires (V1, V2) inférieure et supérieure disposées sur sa largeur annulaire afin d'amplifier le flux thermique du refroidissement initial entre la première et la deuxième ouvertures (5i, 5s).

D'autre part, le conducteur selon l'invention prévoit que la portion (4, 4a, 4b) comprend des évidements circulaires (ec) formant des ailettes de refroidissement ayant idéalement une géométrie soit radiale (comme représentée ici), soit axiale (si l'axe du corps était par exemple vertical) par rapport à l'axe cylindrique du corps (1). Les ailettes permettent ainsi de former avantageusement une plus grande surface de dissipation de chaleur balayée par le flux thermique de refroidissement.

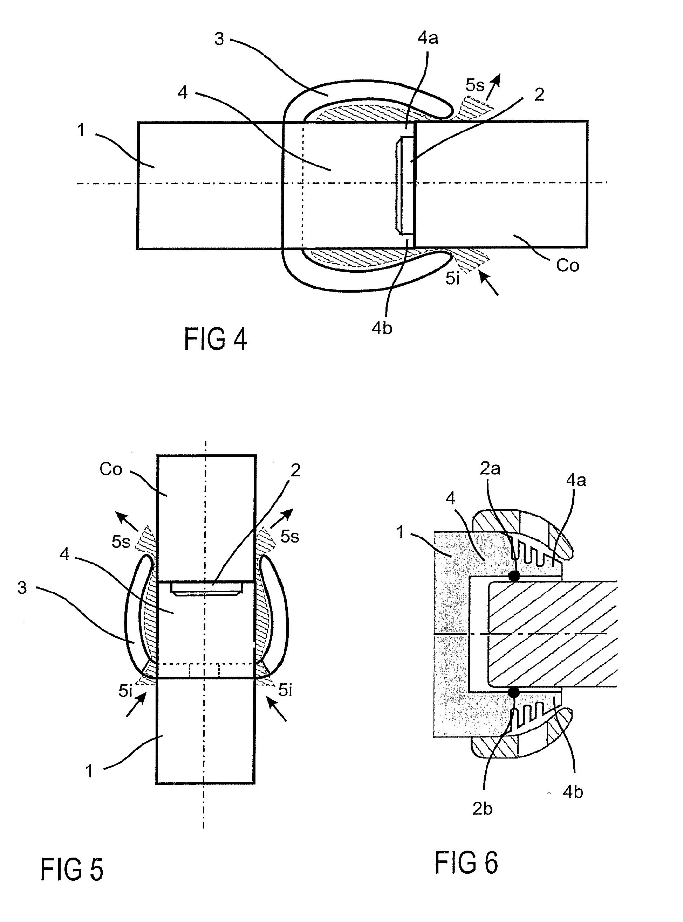

Enfin, il est à noter que le corps (1) et la portion (4) ont une configuration en deux parties. Figure 6 présente une alternative possible de conducteur pour lequel la configuration est monobloc afin d'obtenir une meilleure conductivité électrique et donc de minimiser la chaleur à dissiper. Par ce biais, par conduction axiale un refroidissement du corps peut être atteint pour une partie d'extrémité plus étendue du conducteur vers le corps (1), en supplément du refroidissement prévu pour la portion (4, 4a, 4b).

Figure 4 présente un schéma de principe de conducteur électrique selon l'invention pour une connexion par vissage. En effet, dans la majeure partie des cas de contacteur, la zone de contact (2) est usinée pour permettre un contact soit par coulisse tel que précédemment décrit, soit par vissage d'une broche (Co) mâle externe dans la portion (4). Principalement, en comparaison des figures 1, 2, 3 et 6 ayant une connexion par coulisse, la zone de contact (2) comprend au moins un filetage pour une connexion mécanique et électrique du conducteur avec le connecteur-broche (Co). Tous les caractéristiques et moyens d'améliorations de la figure 2 peuvent être appliqués à ce mode de réalisation.

Enfin, figure 5 présente une coupe d'un conducteur électrique selon figure 4 sous forme monobloc. Ici, le corps (1) a toutefois un axe cylindrique principal vertical et la broche (Co) de connexion s'accouple aussi verticalement dans la zone de contact (2) interne au corps (1) au niveau de la portion d'extrémité (4). Dans ce cas, des ouvertures de type « première et deuxième ouvertures (5i, 5s) sont prévus sur l'élément (3) de part et d'autre de ses extrémités circonférentielles de sorte que la circulation verticalement ascendante d'un flux thermique entre les ouvertures basses et hautes soit toujours permise et garantisse le refroidissement visé.

Enfin en relation avec tous les modes de réalisation possible du conducteur selon l'invention, l'élément (3) peut avoir des propriétés ou/et une fonction diélectriques, en particulier en ayant une surface externe courbe recouvrant au moins la portion (4, 4a, 4b). Egalement, une surface externe courbe permet avantageusement d'augmenter la surface de dissipation de chaleur pour un refroidissement plus efficace.

Le dit conducteur peut ainsi assurer un contact électrique stable d'éléments disposés dans un appareillage de haute ou de moyenne tension présentant une capacité de refroidissement accrue, en particulier pour un appareillage disposé dans un compartiment d'une enveloppe métallique haute tension par exemple de type GIS, tel qu'un sectionneur ou un jeu de barres.

## Revendications

1. Conducteur électrique comprenant :
- un corps (1) métallique ayant un axe principal et une extrémité axiale présentant une zone de contact (2, 2a, 2b) électrique,
- un élément (3) annulaire disposé autour d'une portion (4, 4a, 4b) axiale de l'extrémité dudit corps (1) recouvrant au moins la zone de contact (2, 2a, 2b), **caractérisé en ce que** :
- ledit élément (3) et la portion (4) présentent au moins un évidement interne annulaire, ,
- ledit évidement forme un canal de refroidissement par circulation verticalement ascendante d'un flux thermique entre au moins une première ouverture (5i) dite inférieure et une deuxième ouverture (5s) dite supérieure, les dites ouvertures étant disposées entre l'élément (3) et la portion (4, 4a, 4b) et reliant l'évidement à l'extérieur de l'élément (3).

2. Conducteur selon revendication 1 pour lequel le corps (1), l'élément (3) et/ou la portion (4) comprennent principalement du cuivre ou de l'aluminium.

3. Conducteur selon une des revendications précédentes pour lequel le corps (1) et la portion (4) ont une configuration soit monobloc soit en deux parties.

4. Conducteur selon une des revendications précédentes pour lequel l'élément (3) est une bague solidarisable au corps (1) par enfilement ou vissage par-dessus la portion (4).

5. Conducteur selon une des revendications précédentes 1-3 pour lequel l'élément (3) en deux demi-anneaux solidarisables autour de la portion (4).

6. Conducteur selon une des revendications précédentes pour lequel l'élément (3) comprend au moins deux ouvertures supplémentaires (V1, V2) inférieure et supérieure disposées sur sa largeur annulaire afin d'amplifier le flux thermique de refroidissement.

7. Conducteur selon une des revendications précédentes pour lequel la portion (4, 4a, 4b) comprend des évidements circulaires (ec) formant des ailettes de refroidissement ayant idéalement une géométrie soit radiale, soit axiale par rapport à l'axe du corps (1).

8. Conducteur selon une des revendications précédentes pour lequel l'élément (3) a des propriétés ou/et une fonction diélectriques.

9. Conducteur selon une des revendications précédentes pour lequel l'élément (3) a une surface externe courbe recouvrant au moins la portion (4, 4a, 4b).

10. Conducteur selon une des revendications précédentes pour lequel la zone de contact (2) est usinée pour permettre un contact soit par coulisse soit par vissage d'une broche (Co) mâle externe dans la portion (4).

11. Conducteur selon une des revendications précédentes adapté pour assurer un contact électrique d'éléments disposés dans un appareillage de haute ou de moyenne tension.

12. Conducteur selon la revendication 11 pour lequel l'appareillage est disposé dans un compartiment d'une enveloppe métallique haute tension de type GIS, tel qu'un sectionneur ou un jeu de barres.
